# EUROPEAN PATENT APPLICATION

(11) **EP 3 182 676 A1**
(43) Date of publication of application: **21.06.2017**
(21) Application number: 15307022.2
(22) Date of filing: 16.12.2015
(51) Int. Cl.: H04L 29/08, G06Q 50/00, H04L 12/24

(54) **MANAGEMENT OF THE DELIVERY OF CONTENTS**

(71) Applicant: Orange, 75015 Paris (FR)
(72) Inventor: LE GOFF, Mikael, 29890 Kerlouan (FR)
(74) Representative: Cabinet Plasseraud

(57) **Abstract**

The invention relates to a method for managing delivery parameters of at least one content, a first server controlling the delivery of the at least one content to user devices, the content being associated with at least one first tag, the first server being associated with location parameters, the method being carried out in a platform being connected to the first server and to at least one second server, said second server being accessible by user devices for collaboratively pushing contributions associated with tags:
- receiving (21), from the first server, a request for activity data related to the first tag associated with the content;
- upon reception of the request, retrieving (22) contributions from the at least one second server associated to said first tag;
- selecting (23) a set of contributions by filtering said detected contributions based on the location parameters received in the request;
- generating (24) activity data based on the set of contributions; and
- sending (25) the activity data to the first server for adapting (26) the content delivery parameters based on the activity data.

## Description

The present invention generally relates to the management of the delivery of contents in a telecommunications network.

It finds applications in particular, while not exclusively, in networks comprising content delivery servers.

Many servers scale their services in real time. To this end, a known approach consists in using virtualization and dynamic reconfiguration of network layers depending on whether a used network bandwidth has reached a predetermined threshold.

Servers are also scaling, at some point, in real time depending on the network load or depending on the processing resources necessary to handle the requested data load.

However, scaling might require some time to be efficiently carried out, which leads to maintain the network overload.

There is therefore a need to anticipate the demand on the servers so as to adapt content delivery parameters in advance.

To address this need, a first aspect of the invention concerns a method for managing delivery parameters of at least one content, a first server controlling the delivery of the at least one content to user devices, the content being associated with at least one first tag, the first server being associated with location parameters, the method being carried out in a platform being connected to the first server and to at least one second server, the second server being accessible by user devices for collaboratively pushing contributions associated with tags:
- receiving, from the first server, a request for activity data related to the first tag associated with the content;
- upon reception of the request, retrieving contributions from the at least one second server associated to the first tag;
- selecting a set of contributions by filtering the detected contributions based on the location parameters received in the request;
- generating activity data based on the set of contributions; and
- sending the activity data to the first server for adapting the content delivery parameters based on the activity data.

The present invention enables the first server to receive activity data based on which a future load of the first server can be anticipated. This enables the first server to adapt its capacity to provide the content or to adapt the capacity of a content delivery server it controls, well before the overload occurs, thereby improving the delivery of the content.

The first server can comprise a content delivery server for delivering the content to user devices or can be a control server in charge of a content delivery server delivering the content to user devices.

The location parameters can describe the location of the first server, of a content delivery server that is controlled by the first server, or can describe the location in which the content can be accessed via the first server (or via the content delivery server

The location parameters can be comprised in the request for activity data or can be stored in advance in a database of the platform, in association with an identifier of the first server.

According to some embodiments of the invention, the generated activity data may comprise a timestamp determined by the platform based on the set of contributions, and the timing of the adaptation of the content delivery parameters can be based on the timestamp.

This enables to adapt the content delivery parameters with more accuracy.

In complement, the generated activity data may further comprise a duration of an increased activity associated with the first tag, the duration being determined by the platform based on the set of contributions, and timing of the adaptation of the content delivery parameters may be based on the duration.

This also leads to improve the accuracy when adapting the content delivery parameters.

According to some embodiments, the request can be a request for subscription, and, upon reception of said request, the contributions associated to the first tag are periodically retrieved to periodically report activity data to the first server.

This avoids sending several requests and thereby reduces the load of the telecommunications network.

According to some embodiments, at least one retrieved contribution can be associated with at least one location tag, and the retrieved contribution can be filtered based on the location tag and the location parameters.

This enables to report activity data that is geographically relevant. For example, the location parameters may indicate a territory on which the content is available via the first server or via a content delivery server controlled by the first server, and the location tags can identify the respective locations of the users pushing contributions on the second server.

In complement, the activity data can be generated based on the set of contributions and their respective associated location tags, and the activity data can comprise a predicted load of the first server and an estimated geographic repartition of the user devices requesting the content to the first server.

This also enables to improve the accuracy of the adaptation of content delivery parameters.

According to some embodiments, generating activity data comprises incrementing a counter each time a retrieved contribution is added to the set of contributions after filtering, a counter value of the counter being initialized to zero, and the activity data can comprise the counter value.

Therefore, statistics about the popularity of the first tag is communicated to the first server.

In complement or alternatively, a counter can be associated to each location tag, and, each time a given retrieved contribution is added to the set of contributions after filtering, the counter associated with the location tag of the given retrieved contribution can be incremented.

The statistics are therefore differentiated based on location tags, which improves the accuracy of the adaptation of the content delivery parameters. For example, each counter can correspond to a different region of a country.

According to some embodiments, adapting the first server capacity can comprise
- sharing delivery of the content with other servers;
- adjusting a first server bandwidth;
- adjusting routes within a telecommunications network for accessing the content;
- adjusting software resources of the first server; and/or
- adjusting hardware resources of the first server.

A second aspect of the invention concerns a computer program product comprising a computer readable medium having stored thereon computer program instructions loadable into a computing device and adapted to - when loaded into and executed by said computing device - cause the computing device to perform the steps of a method according to the first aspect of the invention.

A third aspect of the invention concerns a platform accessing a first server controlling the delivery of at least one content to user devices, the content being associated with at least one first tag in a first database controlled by the first server, the first server being associated with location parameters, the platform being connected to at least one second server, said second server being accessible by user devices for collaboratively pushing contributions associated with tags, the platform comprising :
- an input interface for receiving, from the first server, a request for activity data related to the first tag associated with the content;
- a processor arranged to perform the following steps :
   - upon reception of the request, retrieving contributions from the at least one second server associated to said first tag;
   - selecting a set of contributions by filtering said detected contributions based on the location parameters received in the request;
   - generating activity data based on the set of contributions; and
- an output interface for sending the activity data to the first server for adapting content delivery parameters based on the activity data.

According to some embodiments, the first server can be included in the platform.

A fourth aspect of the invention concerns a system comprising a platform according to the third aspect of the invention and the first server.

The present invention is illustrated by way of example, and not by way of limitation, in the figures of the accompanying drawings, in which like reference numerals refer to similar elements and in which:
- Figure 1 represents a system according to some embodiments of the invention;
- Figure 2 is a flowchart illustrating the steps of a method according to some embodiments of the invention;
- Figure 3 illustrates a user terminal according to some embodiments of the invention.

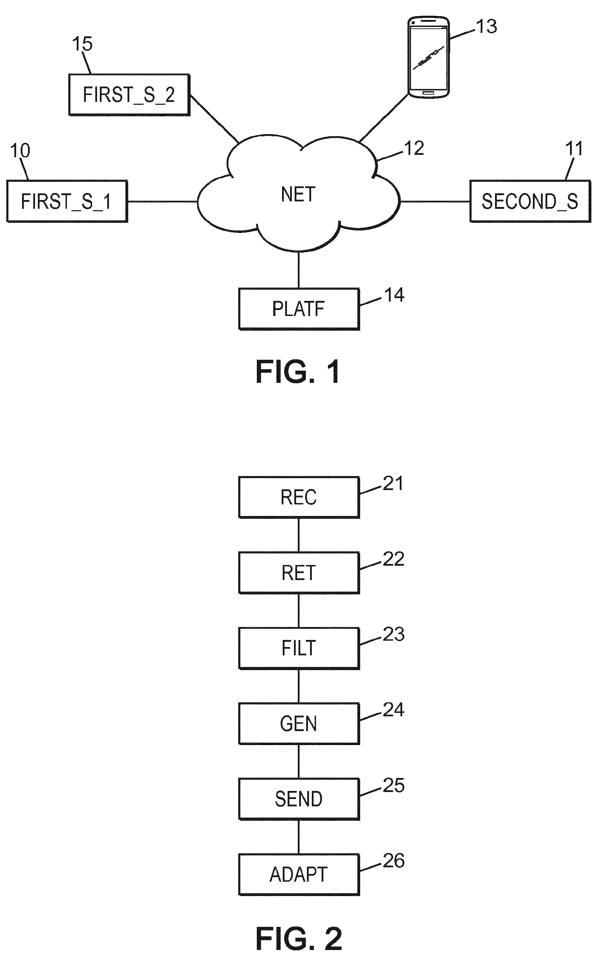

Figure 1 illustrates a system according to some embodiments of the invention.

The system comprises a first server 10, which is arranged to provide at least one content to users or to control another server that is arranged to provide at least one content to users, via a network 12, such as the Internet for example.

For illustrative purposes, the first server 10 is considered as being both a control server and a content delivery server. However, the first server 10 also encompasses a control server exclusively (belonging for example to a network operator in charge of the network 12), arranged to control the content delivery parameters of another server (a content delivery server, not represented on Figure 1).

No restriction is attached to the content. For example, the content can be, for example, a program, text, a webpage or a multimedia file (audio, photo, video, etc). No restriction is also attached to the format of the content.

Users can access the content on the first server 10 via any communication device that is arranged to access the network 12, such as for example a user terminal 13 (or user device), which can be a mobile terminal such as a Smartphone.

No restriction is attached to the user terminal 13, which can alternatively be a laptop, a desktop computer, a mobile phone, a touchpad, a Personal Digital Assistant PDA, etc.

The access to the first server 10 is defined by several content delivery parameters, such as for example:
- first server bandwidth allowed by an operator of the network 12;
- networks routes within the network 12 between the first server 10 and the user terminal 13 in order to access the content;
- hardware resources of the first server 10.

The first server 10 can also modify the content delivery parameters by delegating or sharing the function of providing the content to user terminals, to/with other servers, such as another content delivery server 15 (for example because the other content delivery server 15 has larger hardware resources or a larger bandwidth allowed by the operator of the network 12).

The first server 10 is also associated with location parameters, which can describe the location of the first server 10, a geographical zone in which the content is accessible via the first server 10 (a country for example), or more generally to any geographical zone related to the first server 10.

In addition, the content provided by the first server is associated with at least one first tag. To this end, for example, the first server 10 accesses a local or remote database storing each of the contents in association with at least one first tag. In what follows, the example of a single content is considered. However, the first server 10 is more generally in charge of a plurality of contents.

The first tag encompasses any semantic data unit related to the content delivered by the first server 10. For example, the first tag can be a keyword:
- in case the content is a movie, the keyword can be the title, the release year, the director's name, the main actor's name, etc;
- in case the content is an audio file, the keyword can be the artist's name, the album's name or the track's name.

The system according to the invention further comprises a second server 11 being accessible by user devices, such as the user terminal 13, for collaboratively pushing contributions associated with tags.

No restriction is attached to what is meant by "contributions": it encompasses any data that can be pushed by the user terminal 13, such as text, a link to a webpage such as an URL, or any multimedia content (audio, photo, video, etc). For example, the second server 11 can be dedicated to a social network, a blog, a messaging platform, an instant messaging platform, an SMS platform, etc.

In what follows, the example of the second server 12 being a social network server is considered for illustrative purpose only.

Users can register to their personal accounts to share contributions. As explained above, at least some of the contributions that are pushed by users on the second server 11 are associated to respective tags.

For example, in case the user comments a sentence on a picture on the social network, each noun of the sentence can be considered as being a tag. In case the user publishes a video on a webpage such as Youtube™, words of the description of the video can be considered as a tag. In case the user publishes video or photo contents on Instagram™, the tags can be hashtags.

The system also comprises a platform 14 that is arranged to access the first server 10 and the second server 11 via the network 12. According to some embodiments of the invention, the first server 10 is included in the platform 14.

Figure 2 is a flowchart illustrating the steps of a method according to the invention.

As explained above, the present invention aims at anticipating overload on the first server 10 so as to adapt the content delivery parameters in advance (before the overload occurs).

To this end, at step 21, a request for activity data related to the first tag associated with the content is received by the platform 14 from the first server 10, the request comprising the location parameters associated with the first server 10.

For example, the location parameters can identify France as being the location in which the first server 10 is able to provide the content. The location parameters can also identify the address of the location of the first server 10.

Also for example, the content can be a music album available for free via a given website, and downloadable on the first server 10 (or another server manager by the first server 10) for a short period of time (for example two hours), the data information for the availability being not announced yet.

Therefore, it is useful for the first server 10 to obtain information that enable to anticipate a potential overload upon release on this new music album. To this end, the request identifies a first tag which can for example be the name of the album. In complement, several other first tags can be associated with the content (artist's name, label's name, song titles, etc).

The request can be received only once for a given first server and is therefore a registration request. Alternatively, the request can be periodically received from the first server 11 (each time the first server 11 wants to receive activity data related to the first tag).

Upon reception of the request, the platform 14 can retrieve contributions from the second server 11 that are associated to the first tag at step 22. To this end, the platform 14 can directly access the server 11 or can send a contribution request to the second server 11, the contribution request identifying the first tag. In response to this contribution request, the second server 11 can :
- transmit all the contributions that are associated to the first tag;
- transmit all the contributions that are associated to the first tag and that have been pushed by users over a predefined period;
- transmit all the contributions that are associated to the first tag and that have been pushed by users since the reception of a previous contribution request;
- transmit, each time a contribution associated to the first tag is pushed by a user on the second server 12, said contribution to the platform 14.

The platform 14 can store a graph database storing correspondences between first servers and data related to the content they respectively provide (tags associated with the content, location parameters of the content delivery server, and optionally dates of availability of the content). In addition, the graph database can also comprise respective weights that give a more precise idea of how much a topic shared on social networks (which directly concerns the access to some contents) can impact the respective first servers (network operators or content providers). The graph database can be updated upon receiving of a new request at step 21.

In the example detailed above, the contributions that are associated to the album's name are retrieved, the second server 11 being, for illustrative purpose, a social network server such as Facebook™. The contributions can encompass all the comments comprising the album's name and the publications (video, photo, audio) identifying the album's name.

Known methods can be used to extract the contributions associated with the first tag, such as big data analyses (trending).

At step 23, the retrieved contributions are filtered by the platform 14 based on the location parameters received in the request at step 21 to obtain a set of contributions. To this end, the contributions can be associated with location tags. Location tags can be manually entered by the person pushing the contribution on the second server 11, or can be automatically retrieved by the second server 11 based on GPS data for example. Then, filtering is applied by comparing the location tags and the location parameters received with the request. For example, if the location tag of a first contribution is "Los Angeles", then the first contribution is not added to the set of contribution because it does not match the location parameters "France". If the location tag of a second contribution is "Paris", then the second contribution is added to the set of contribution. No restriction is attached to the rules used for filtering the contributions based on the location parameters.

This enables to keep relevant contributions only. Indeed, in the example given above, the first contribution means that the person located in Los Angeles might be interested in downloading the music album for free. However, as the first server 10 is only arranged to provide the content in France, this information is not relevant and will not impact the load of the first server 10.

At step 24, the platform 14 generates activity data based on the set of contributions obtained at step 23. Activity data can comprise statistics calculated based on the set of contributions. For example, the activity data can comprise a predicted load of the first server. The predicted load can be obtained based on a counter value of a counter that is incremented each time a retrieved contribution is added to the set of contributions after filtering. In addition, when at least some of the contributions of the set are associated with location tags, the activity data can also comprise a geographic repartition of the user devices requested the content to the first server. For example, in the example detailed above, a counter can be used for each region of France, and a counter of a given region can be incremented each time a contribution that is associated to a location tag in the given region is added to the set of contributions.

No restriction is attached to the models used to determine the activity data. A simple model using a counter is considered for illustrative purposes. However, more complex models, which are well known, can also be used to determine the activity data.

In addition, in the case where several first tags are associated to the content on the first server 10, respective weights can be associated with the first tags, and global activity data can be determined by grouping the activity data for the first tags and by taking into account the respective weights.

The generated activity data can also comprise a timestamp determined by the platform 14 based on a semantic analysis of the set of contributions. For example, in the example detailed above, the timestamp can correspond to an expected date of release of the music album spread on the social network of the second server 11. In complement, the generated activity data may comprise a duration of an increased activity associated with the first tag, the duration being determined by the platform 14 based on a semantic analysis of the set of contributions. For example, in the example above, the duration can correspond to an expected duration of the possibility to download for free the music album, as spread on the social network of the second server 11.

At step 25, the activity data is sent by the platform 14 to the first server 10 for adapting the first server capacity based on the activity data.

At step 26, the first server 10 can adapt its capacity (or adapt the capacity of the content delivery servers it manages, in case the first server 10 is a control server exclusively) by:
- sharing delivery of the content with other servers, for example with the other server 15;
- adjusting a bandwidth of the first server 10. In case the first server 10 belongs to a service provider, the service provider can request the network operator to permanently or temporarily change the bandwidth allocated to the first server 10. In case the first server 10 belongs to a network operator and is a control server, the first server 10 can change the bandwidth allocated to a content delivery server it controls;
- adjusting routes within a telecommunications network for accessing the content;
- adjusting software resources of the first server 10 or the software resources of content delivery servers controlled by the first server 10; and/or
- adjusting hardware resources of the first server 10 or the hardware resources of content delivery servers controlled by the first server 10.

In case the activity data comprises the timestamp, the timing of the adaptation of the first server capacity depends on the timestamp (for example, the bandwidth of the first server 10 is increased from a data corresponding to the timestamp). In addition, if the activity data comprises the duration, the timing of the adaptation also depends on the duration (for example, the bandwidth of the first server 10 is increased during said duration).

The activity data generated by the platform 14 can be statistical data only (and in that case further analysis by the first server 10 is required to adjust the capacity), or can also comprise recommendations as how to adjust the capacities. To this end, the activity data can be a software electronic notification that alerts of an anticipated change in computer capacity requirements for first servers or for scalable networks, that build, support and maintenance of a networked computer system. The platform 14 can therefore estimate the requirements for a first server 10 based on the popularity of a tag or a combination of tags at a specific location or at a set of locations, at specific times.

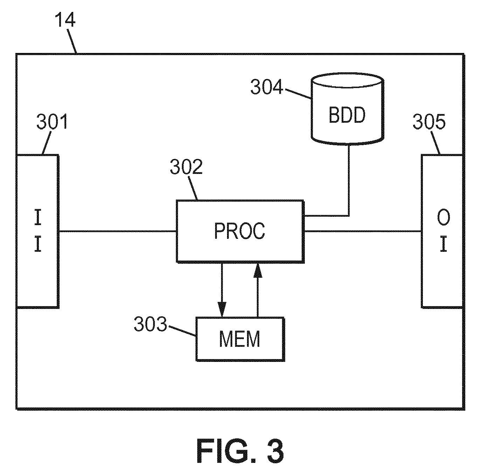

Figure 3 shows a platform 14 according to some embodiments of the invention.

The platform 14 comprises a random access memory 303 and a processor 302 that can store instructions for performing the steps 21 to 25 of a method as described above when referring to figure 2.

The platform 14 may also comprise a database 304 for storing data resulting from the method according to the invention. For example, the database may comprise the retrieved contributions, the set of contributions and the graph database described above.

The platform 14 comprises an input interface 301 for receiving requests from the first servers and contributions from the second server. The platform 14 also comprises an output interface 305 to transmit the activity data to the first server 10. The input interface 301 and the output interface 305 can for example be a single network interface to access the network 12. The network interface can be a wired interface (Ethernet) or wireless (2G, 3G, 4G, Wi-fi, etc).

## Claims

1. A method for managing delivery parameters of at least one content, a first server (10) controlling the delivery of the at least one content to user devices, the content being associated with at least one first tag, the first server being associated with location parameters, the method being carried out in a platform (14) being connected to the first server and to at least one second server (11), said second server being accessible by user devices for collaboratively pushing contributions associated with tags:
- receiving (21), from the first server, a request for activity data related to the first tag associated with the content;
- upon reception of the request, retrieving (22) contributions from the at least one second server associated to said first tag;
- selecting (23) a set of contributions by filtering said detected contributions based on the location parameters received in the request;
- generating (24) activity data based on the set of contributions; and
- sending (25) the activity data to the first server for adapting (26) the content delivery parameters based on the activity data.

2. The method according to claim 1, wherein the generated activity data comprises a timestamp determined by the platform (14) based on the set of contributions, wherein timing of the adaptation of content delivery parameters is based on said timestamp.

3. The method according to claim 2, wherein the generated activity data further comprises a duration of an increased activity associated with the first tag, said duration being determined by the platform based on the set of contributions, and wherein timing of the adaptation of the content delivery parameters is based on said duration.

4. The method according to one of the preceding claims, wherein the request is a request for subscription, and wherein, upon reception of said request, the contributions associated to said first tag are periodically retrieved to periodically report activity data to the first server (10).

5. The method according to one of the preceding claims, wherein at least one retrieved contribution is associated with at least one location tag, wherein said retrieved contribution is filtered based on the location tag and the location parameters.

6. The method according to claim 5, wherein the activity data is generated based on the set of contributions and their respective associated location tags, and wherein the activity data comprises a predicted load of the first server (10) and an estimated geographic repartition of the user devices requesting the content to the first server.

7. The method according to one of the preceding claims, wherein generating activity data comprises incrementing a counter each time a retrieved contribution is added to the set of contributions after filtering, a counter value of the counter being initialized to zero, and wherein the activity data comprises the counter value.

8. The method according to claims 6 and 7, wherein a counter is associated to each location tag, and wherein each time a given retrieved contribution is added to the set of contributions after filtering, the counter associated with the location tag of said given retrieved contribution is incremented.

9. The method according to one of the preceding claims, wherein adapting the content delivery parameters comprises :
- sharing delivery of the content with other servers (15);
- adjusting a first server bandwidth;
- adjusting routes within a telecommunications network for accessing the content;
- adjusting software resources of the first server; and/or
- adjusting hardware resources of the first server.

10. A computer program product comprising a computer readable medium having stored thereon computer program instructions loadable into a computing device and adapted to - when loaded into and executed by said computing device - cause the computing device to perform the steps of a method according to anyone of claims 1 to 9.

11. A platform accessing a first server (10) controlling the delivery of at least one content to user devices, the content being associated with at least one first tag in a first database controlled by the first server, the first server being associated with location parameters, the platform (14) being connected to at least one second server (11), said second server being accessible by user devices for collaboratively pushing contributions associated with tags, the platform comprising :
- an input interface (301) for receiving, from the first server, a request for activity data related to the first tag associated with the content;
- a processor (302) arranged to perform the following steps :
• upon reception of the request, retrieving contributions from the at least one second server associated to said first tag;
• selecting a set of contributions by filtering said detected contributions based on the location parameters received in the request;
- generating activity data based on the set of contributions; and
- an output interface (305) for sending the activity data to the first server for adapting content delivery parameters based on the activity data.

12. A platform according to claim 11, wherein the first server (10) is included in said platform (14).

13. A system comprising a platform according to claim 11 and the first server.
